# EUROPÄISCHE PATENTANMELDUNG

(11) **EP 3 098 468 A2**
(43) Veröffentlichungstag der Anmeldung: **30.11.2016**
(21) Anmeldenummer: 16000891.8
(22) Anmeldetag: 21.04.2016
(51) Int. Cl.: F16D 3/38

(54) **ELASTISCHE KLAUENKUPPLUNG**

(30) Priorität: 27.05.2015 DE 102015108324
(71) Anmelder: Centa-Antriebe Kirschey GmbH, 42781 Haan (DE)
(72) Erfinder: EXNER, Jochen, 53773 Hennef (DE); FITSCH, Martin, 42115 Wuppertal (DE)
(74) Vertreter: Roche, von Westernhagen & Ehresmann

(57) **Zusammenfassung**

Dargestellt und beschrieben ist u, a, eine elastische Klauenkupplung (10) zur Übertragung von Drehmomenten von einem Antrieb (11) zu einem Abtrieb (12), mit einem ersten, dem Antrieb zugeordneten Kupplungsteil (14), und einem zweiten, dem Abtrieb zugeordneten Kupplungsteil (15), die beide um eine gemeinsame Drehachse (13) rotieren, wobei an beiden Kupplungsteilen Klauen (18, 19) angeordnet sind, die sich von dem jeweiligen Kupplungsteil radial nach außen und in Axialrichtung im Sinne einer Erzielung einer axialen Überdeckung mit dem jeweils anderen Kupplungsteil erstrecken, wobei jeweils zwei in Umfangsrichtung um die Drehachse benachbart angeordnete Klauen zwischen sich einen Unterbringungsraum (32a, 32b, 32c, 32d, 32e) für einen elastischen Körper ausbilden. Die Besonderheit besteht u. a. darin, dass in Umfangsrichtung eine Mehrzahl von elastischen Körpern (25a, 25b, 25c) erster Art und eine Mehrzahl von elastischen Körpern (26a, 26b, 26c) zweiter Art vorgesehen sind, wobei sich die elastischen Körper zweiter Art von den elastischen Körpern erster Art hinsichtlich ihrer Geometrie und/oder hinsichtlich Ihrer Materialbeschaffenheit unterscheiden.

## Beschreibung

Die Erfindung betrifft zunächst eine elastische Klauenkupplung nach dem Oberbegriff des Anspruches 1.

Derartige Klauenkupplungen sind bekannt, und werden von der Anmelderin seit Jahrzehnten entwickelt und gefertigt. Ein Beispiel für eine gattungsgemäße elastische Klauenkupplung ist in der DE 10 2013 004 583 A1 der Anmelderin offenbart.

Die Drehmomentübertragung von dem ersten Kupplungsteil auf das zweite Kupplungsteil erfolgt bei dieser Kupplung ausschließlich über die elastischen Körper, die beim Stand der Technik als Kreiszylinder ausgebildet sind. Sie weisen insoweit eine Rollenform auf. Bei diesem Kupplungstyp spricht man daher auch von einer Rollenkupplung.

Ausgehend von der Kupplung gemäß des Oberbegriffes des Anspruches 1 besteht die Aufgabe der Erfindung darin, die Kupplung derartig weiterzubilden, dass sie verbesserte Kupplungseigenschaften aufweist.

Die Erfindung löst diese Aufgabe mit den Merkmalen des Anspruches 1, insbesondere mit denen des Kennzeichenteils, und ist demgemäß dadurch gekennzeichnet, dass in Umfangsrichtung eine Mehrzahl von elastischen Körpern erster Art und eine Mehrzahl von elastischen Körpern zweiter Art vorgesehen sind, wobei sich die elastischen Körper zweiter Art von den elastischen Körpern erster Art hinsichtlich ihrer Geometrie und/oder hinsichtlich Ihrer Materialbeschaffenheit unterscheiden.

Das Prinzip der Erfindung besteht im Wesentlichen darin, anstelle der im Stand der Technik vollständig identisch ausgebildeten elastischen Körper nunmehr wenigstens zwei Gruppen unterschiedlich ausgebildeter elastischer Körper vorzusehen. Demnach ist eine Gruppe von elastischen Körpern erster Art und eine zweite Gruppe von elastischen Körpern zweiter Art vorgesehen.

Die elastischen Körper erster Art können dem kreiszylindrisch ausgebildeten Rollenkörper des Standes der Technik vollidentisch entsprechen.

Insbesondere Jeder zweite elastische Körper erster Art wird gemäß der Erfindung durch einen unterschiedlich ausgebildeten elastischen Körper zweiter Art ersetzt.

Der elastische Körper zweiter Art kann eine gegenüber dem elastischen Körper erster Art unterschiedliche Geometrie aufweisen. Beispielsweise kann der elastische Körper zweiter Art einen Querschnitt aufweisen, der von dem Querschnitt eines elastischen Körpers erster Art abweicht. Während die elastischen Körper erster Art einen kreiszylindrischen Querschnitt aufweisen können, kann der elastische Körper zweiter Art einen Halteabschnitt und einen Spannabschnitt aufweisen. Der Halteabschnitt kann beispielsweise einer Befestigung an einer Innenflanke einer Klaue dienen, und insoweit relativ zu der benachbart angeordneten Klaue fest angeordnet sein. Beispielsweise kann der Halteabschnitt des elastischen Körpers zweiter Art Vorsprünge oder Ausbuchtungen als Einsteck- oder Einsetzabschnitte aufweisen, die In entsprechend geformte Taschen der Klaue formschlüssig eingreifen können, und so den elastischen Körper zweiter Art fest relativ zu der entsprechend benachbarten Klaue festlegen können.

Der elastische Körper zweiter Art kann darüber hinaus einen Spannabschnitt aufweisen, der sich beispielsweise von dem Halteabschnitt weg erstreckt, und sich insbesondere verjüngt. Der Spannabschnitt kann an einer Vorspannfläche einer dem Spannabschnitt benachbarten Innenflanke einer Klaue angeordnet sein, Der Spannabschnitt kann dabei auf eine solche Weise mit der Vorspannfläche kooperieren, dass im montierten Zustand der Kupplung, ohne Auftreten von Last, die Vorspannfläche auf den Spannabschnitt eine in Umfangsrichtung gerichtete Kraft ausübt.

Hierdurch kann - in Abhängigkeit von der gewählten geometrischen Ausbildung der elastischen Körper zweiter Art und deren Zahl - das zweite Kupplungsteil relativ zu dem ersten Kupplungsteil vorgespannt werden. Auch die elastischen Körper erster Art können hierdurch einer gewissen Vorspannkraft unterliegen.

Dies ermöglicht eine verbesserte Arbeitsweise und die Erzielung einer Kennlinie der Kupplung, die sich insbesondere bei Lastwechseln, insbesondere bei abrupten Lastwechseln, positiv bemerkbar macht. Bei einer Kupplung des Standes der Technik, die ausschließlich identisch ausgebildete elastische Rollenkörper verwendet, kann im Zuge eines Lastwechsels eine Flächenlösung der elastischen Rollenkörper von den Innenflanken der Klauen auftreten. Hierdurch können gewisse Impulse, bzw. Schläge auftreten. Dies kann einerseits zu einer gewissen Lärmentwicklung, und andererseits zu einem übermäßigen, und wünschenswerterweise zu verhindernden Verschleiß führen,

Erfindungsgemäß kann durch den Einsatz unterschiedlich ausgebildeter elastischer Körper, und insbesondere durch eine Wahl unterschiedlicher Geometrien der elastischen Körper, eine solche Flächenlösung auf Grund der erzielten Vorspannung bei Lastwechseln reduziert, bzw. vollständig vermieden werden.

Die elastischen Körper erster Art und die elastischen Körper zweiter Art können - bei Wahl unterschiedlicher Querschnitte - eine gleiche oder im Wesentlichen gleiche axiale Länge aufweisen.

Gemäß einem weiteren Aspekt der Erfindung können die elastischen Körper erster Art und die elastischen Körper zweiter Art eine unterschiedliche Materialbeschaffenheit aufweisen. Insbesondere können beide Arten elastischer Körper aus einem elastischen, insbesondere gummielastischen, Material bestehen, aber eine unterschiedliche Shore-Härte aufweisen.

Beispielsweise kann vorgesehen sein, dass die elastischen Körper erster Art, die insbesondere als kreiszylindrische Rollenkörper ausgebildet sind, eine Shore-Härte von 50 bis 60 aufweisen, und die elastischen Körper zweiter Art, die der Einfachheit halber auch als Pufferelement bezeichnet werden, eine Shore-Härte von etwa 80 aufweisen.

Der guten Ordnung halber sei angemerkt, dass Im Rahmen der Erfindung vorgesehen sein kann, dass die elastischen Körper erster Art und/oder die elastischen Körper zweiter Art auch Einlegerelemente, beispielsweise auch metallische Einlegerelemente aufweisen können, die z. B. in die gummielastische Masse der Körper mit einvulkanisiert sind.

Der guten Ordnung halber sei darauf hingewiesen, dass von der Erfindung umfasst ist, wenn die elastischen Körper zweiter Art sich von den elastischen Körpern erster Art sowohl hinsichtlich ihrer geometrischen Ausbildung, also insbesondere hinsichtlich ihres Querschnittes, als auch hinsichtlich ihrer Materialbeschaffenheit, unterscheiden.

Weiter ist vorteilhafterweise vorgesehen, dass sämtlichen elastischen Körper erster Art im Wesentlichen gleich ausgebildet sind, bzw. aus im Wesentlichen dem gleichen Material bestehen, und auch die elastischen Körper zweiter Art im Wesentlichen identisch ausgebildet sind, und insbesondere auch sämtlich aus dem gleichen oder im Wesentlichen gleichen Material bestehen.

Schließlich ist von der Erfindung auch umfasst, wenn mehr als zwei Arten elastischer Körper vorgesehen sind.

Gemäß einer vorteilhaften Ausgestaltung der Erfindung ist zumindest eine Klaue radial montierbar. Alternativ ist zumindest ein Element einer Klaue radial montierbar Dies ermöglicht eine radiale Montage der Klaue bezogen auf den ersten und/oder auf den zweiten Kupplungsteil. Vorzugsweise ist hier das Kupplungsteil nach Art eines hohlen Kreiszylinders oder eines Ringkörpers ausgebildet, oder umfasst einen solchen.

Gemäß einer Ausführungsform der Erfindung ist an der Klaue, oder im Falle einer segmentierten Klaue, an einem Segment der Klaue, eine Vorspannfläche angeordnet. In montiertem Zustand kann die Vorspannfläche eine Kraft in Umfangsrichtung auf den an der Vorspannfläche anliegenden elastischen Körper ausüben. Auf Grund dieser Kraftausübung können auch die beiden Kupplungsteile relativ zueinander vorgespannt werden.

Zugleich werden auch die elastischen Körper erster Art unter eine Vorspannung gesetzt.

Die in Umfangsrichtung ausgeübte Vorspannkraft wird in ihrer Höhe z. B. von der Zahl der elastischen Körper zweiter Art bestimmt.

Vorzugsweise ist die Vorspannfläche an der Klaue, bzw, an dem Klauensegment, derartig ausgerichtet, dass mit zunehmender radialer Annäherung der Klaue, bzw. des Klauensegmentes, an dem Montageendzustand, bzw. an die Drehachse, die ausgeübte Vorspannkraft zunimmt. Im einfachsten Falle ist die Vorspannfläche eine Schrägfläche oder Steuerfläche, die entlang einer Ebene ausgerichtet ist, und unter einem spitzen Winkel zu einer die Drehachse einschließenden Mittellängsebene der Kupplung ausgerichtet ist.

Vorzugsweise wird Im Zuge der fortwährenden radialen Annäherung der Klaue, bzw, des Klauensegmentes, an die Drehachse die Vorspannkraft erhöht, bzw. das Pufferelement komprimiert,

Dabei kann z. B. vorgesehen sein, dass die Klaue, bzw. das Klauensegment, welches die Vorspannfläche trägt, im Zuge der Montage jedes Mal bis zu einem Endzustand hin verlagert wird, so dass die durch die Vorspannfläche ausgeübte Vorspannkraft festgelegt ist. Auch kann z. B. vorgesehen sein, dass die Vorspannkraft nach Art einer radialen Nachführung in Folge einer Nachstellung des Abstandes der Vorspannfläche von der Drehachse der Kupplung auch später eingestellt werden kann. Z. B. kann eine Nachstellung oder Einstellung oder Anpassung der Vorspannkraft zu Wartungszwecken erfolgen.

Gemäß einem weiteren Aspekt der Erfindung wird die Aufgabe der Erfindung durch die Merkmale des Anspruches 3 gelöst. Demnach ist vorgesehen, dass zumindest eine Klaue oder zumindest ein Segment einer Klaue radial montierbar ausgebildet ist, wobei an der Klaue oder an dem Segment der Klaue eine Vorspannfläche angeordnet ist, die im montierten Zustand eine Kraft in Umfangsrichtung auf den an der Vorspannfläche anliegenden elastischen Körper ausübt.

Gemäß der Erfindung ist eine Vorspannfläche vorgesehen, die Im Zuge der radialen Festlegung der Klaue oder im Zuge der radialen Festlegung des Segmentes der Klaue, an dem Kupplungsteil eine Vorspannkraft In Umfangsrichtung erzeugen kann. Die Vorspannfläche ist Bestandteil des Unterbringungsraumes für einen elastischen Körper. Vorzugsweise ist vorgesehen, dass die Kupplung elastische Körper erster Art und elastische Körper zweiter Art aufweist. Dabei ist weiter vorzugsweise vorgesehen, dass eine Mehrzahl von Vorspannflächen vorgesehen ist, die jeweils nur mit den elastischen Körpern zweiter Art kooperieren.

Die Bereitstellung und Anordnung einer Vorspannfläche ermöglicht jedenfalls gemäß der Erfindung die Ausübung einer Vorspannkraft zwischen den Kupplungsteilen, so dass die elastischen Körper im lastfreien Zustand der Kupplung unter Vorspannung stehen. Hierdurch kann eine Verbesserung der Kupplungseigenschaften erreicht werden, insbesondere bei abrupten Lastwechseln. Durch Ausübung einer solchen Vorspannkraft kann ein Lösen der Flächen der elastischen Körper von den entsprechenden Flanken der Klauen bei Lastwechseln reduziert, bzw. verhindert werden.

Gemäß einer vorteilhaften Ausgestaltung der Erfindung sind Unterbringungsräume erster Art und Unterbringungsräume zweiter Art vorgesehen, die unterschiedlich ausgebildet sind. Vorzugsweise sind sämtliche Unterbringungsräume erster Art gleich ausgebildet, und weiter vorzugsweise sind auch sämtliche Unterbringungsräume zweiter Art gleich ausgebildet. Die Unterbringungsräume erster Art und die Unterbringungsräume zweiter Art unterscheiden sich allerdings voneinander. In Umfangsrichtung der Kupplung können sich Unterbringungsräume erster Art und Unterbringungsräume zweiter Art abwechseln, oder entlang einer vorgegebenen Regelmäßigkeit angeordnet sein.

Vorzugsweise ist die Geometrie des Unterbringungsraumes erster Art an die Geometrie des elastischen Körpers erster Art angepasst. Insbesondere erfolgt eine Anpassung des Querschnittes des Unterbringungsraumes erster Art an die Geometrie, insbesondere an den Querschnitt, des elastischen Körpers erster Art.

Weiter vorteilhafterweise ist die Geometrie, insbesondere der Querschnitt, des Unterbringungsraumes zweiter Art an den Querschnitt des elastischen Körpers zweiter Art angepasst.

Diesbezüglich kann insbesondere vorgesehen sein, dass die Kupplung zwar ausschließlich identische Klauen verwendet, die beispielsweise spiegelverkehrt, bezogen auf eine zwischen beiden Kupplungsteilen angeordnete Radialebene, angebracht sind. Diese Klauen können allerdings bezüglich ihrer Mittellängsebene asymmetrisch ausgebildet sein, um auf diese Weise unterschiedlich ausgebildete Unterbringungsräume erster Art und zweiter Art bereitzustellen.

Gemäß einer weiteren vorteilhaften Ausgestaltung der Erfindung umfasst eine Mehrzahl der Klauen wenigstens zwei Segmente, insbesondere zwei in Radialrichtung montierbare Segmente, wobei insbesondere wenigstens ein Fußsegment und wenigstens ein Kopfsegment vorgesehen ist. Weiter vorzugsweise ist die Vorspannfläche an dem Kopfsegment angeordnet.

Dies ermöglicht die Bereitstellung einer Kupplung, bei der zunächst die Fußsegmente der Klauen an dem jeweiligen Kupplungsteil, z. B. an dem ersten Kupplungsteil und an dem zweiten Kupplungsteil, festgelegt werden, und sodann eine Einbringung der elastischen Körper, insbesondere der elastischen Körper erster Art und der elastischen Körper zweiter Art, In die jeweiligen Unterbringungsräumen erfolgt.

Erst in einem letzten Schritt kann dann das entsprechende Kopfsegment an dem Fußsegment oder unmittelbar an dem ersten Kupplungstell oder an dem zweiten Kupplungsteil befestigt werden. Im Zuge der Befestigung des Kopfsegmentes, insbesondere im Zuge dessen radialer Heranbringung, in fortwährender Annäherung an die Drehachse, kann die an dem Kopfsegment angeordnete Vorspannfläche auf die elastischen Körper, insbesondere auf die elastischen Körper zweiter Art, einwirken, und eine in Umfangsrichtung gerichtete Kraft aufbauen, so dass nach erfolgter Montage des Kopfsegmentes eine Vorspannung der beiden Kupplungsteile in Umfangsrichtung relativ zueinander erreicht ist.

Gemäß einer vorteilhaften Ausgestaltung der Erfindung unterscheiden sich die elastischen Körper zweiter Art von den elastischen Körpern erster Art lediglich hinsichtlich ihres Querschnittes. Insbesondere ist von der Erfindung umfasst, dass die elastischen Körper erster Art einen kreisförmigen Querschnitt aufweisen und die elastischen Körper zweiter Art einen davon abweichenden Querschnitt. Die elastischen Körper zweiter Art können insbesondere einen im Wesentlichen dreieckförmigen Querschnitt aufweisen. Gemäß der Erfindung kann dabei vorgesehen sein, dass die Querschnittsform des elastischen Körpers zweiter Art von einem Halteabschnitt und einem Spannabschnitt gebildet ist. Der Halteabschnitt kann Bereiche oder Abschnitte aufweisen, mit denen eine Festlegung des elastischen Körpers zweiter Art an der entsprechenden Klaue erfolgt. Insbesondere ist hier eine ortsfeste Festlegung des elastischen Körpers zweiter Art an der entsprechenden Klaue möglich.

Der Spannabschnitt lehnt sich an die gegenüberliegende Flanke der benachbarten Klaue an. Insbesondere liegt der Spannabschnitt an der Vorspannfläche an. Im Zuge der Montage des Kopfsegmentes der Klaue und im Zuge fortwährender radialer Annäherung der Vorspannfläche an die Drehachse der Kupplung, wird der Spannabschnitt, und damit das elastische Element zweiter Art insgesamt, In Umfangsrichtung komprimiert. Hierdurch wird eine Vorspannkraft in Umfangsrichtung ausgeübt.

Weiter vorteilhaft ist vorgesehen, dass die elastischen Körper erster Art und die elastischen Körper zweiter Art um die Drehachse herum unter einem gleichen oder im Wesentlichen gleichen Radius angeordnet sind. Diese Betrachtung bezieht sich auf den ungefähren geometrischen Schwerpunkt oder Mittelpunkt der elastischen Körper erster Art und der elastischen Körper zweiter Art.

Die elastischen Körper zweiter Art können auch als Pufferelemente bezeichnet werden. Diese Pufferelemente können Überfaststöße, die im Betrieb auftreten, abfedern.

Insbesondere ist gemäß der Erfindung vorgesehen, dass die elastischen Körper erster Art und die elastischen Körper zweiter Art unterschiedliche Charakteristiken einer Schwingungsdämpfung aufweisen.

Von der Erfindung ist darüber hinaus auch umfasst, wenn zusätzlich zu den eine gewisse Vorspannung bereitstellenden elastischen Elementen zweiter Art noch weitere Vorspannelemente, z. B. Keilelemente oder dergleichen, vorgesehen sind.

Ein weiter vorteilhafter Aspekt der Erfindung liegt darin, dass unmittelbar an der Klaue, insbesondere an dem Kopfsegment der Klaue, eine Halterung für den elastischen Körper zweiter Art vorgesehen ist Die Halterung ist bei den in den Figuren dargestellten Ausführungsbeispielen im Wesentlichen nach Art von Einsteck- oder Halteschlitzen oder Halterungsaufnahmen ausgebildet. Es kommen allerdings auch andere Halterungen in Betracht.

Weitere Vorteile ergeben sich aus den nicht zitierten Unteransprüchen, sowie anhand der nachfolgenden Beschreibung der Ausführungsbeispiele. In den Figuren zeigen:
- Figur 1: in einer schematischen, perspektivischen Ansicht ein erstes Ausführungsbeispiel einer erfindungsgemäßen Kupplung,
- Figur 1a: das Ausführungsbeispiel der Fig. 1, wobei zusätzlich antriebsseitig ein Flansch dargestellt ist, und wobei zum Zwecke der Illustration ein etwa 75 Winkelgrad umfassendes Umfangssegment der Kupplung von Klauen freigehalten ist, in einer teilgeschnittenen, schematischen, perspektivischen Ansicht,
- Fig. 2: die Kupplung der Fig. 1 in einer schematischen Ansicht gemäß Ansichtspfeil II in Fig. 1,
- Fig. 3: in einer teilgeschnittenen, schematischen Ansicht eine Teilschnittdarstellung durch die Kupplung der Fig. 2, etwa entlang Schnittlinie III-III in Fig. 2,
- Fig. 4: eine schematische, teilgeschnittene Ansicht durch die Kupplung der Fig. 2, etwa entlang Schnittlinie IV-IV in Fig. 2,
- Fig. 5: in einer Darstellung gemäß Fig. 4 eine teilgeschnittene Ansicht der Vorrichtung der Fig. 2, etwa entlang Schnittlinie V-V in Fig. 2,
- Fig. 6: eine vergrößerte, teilgeschnittene, schematische Ansichtsdarstellung eines Bereiches der Kupplung der Fig. 2, etwa entlang Teilkreis VI in Fig. 2, wobei die schematische Schnittdarstellung der Fig. 6 einer Schnittebene entspricht, die in Blickrichtung des Betrachters der Fig. 2 hinter der Papierebene liegt,
- Fig. 7: in einer teilgeschnittenen, schematischen Ansicht eine Stirnansicht eines Kopfsegmentes einer Klaue,
- Fig. 8: in einer schematischen, perspektivischen Ansicht die Klaue der Fig. 7, etwa gemäß Ansichtspfeil VIII in Fig. 7,
- Fig. 9: eine schematische Stirnansicht eines Fußsegmente einer Klaue in Einzeldarstellung,
- Fig. 10: eine Schnittdarstellung durch die Klaue der Fig. 9, etwa entlang Schnittlinie X-X in Fig. 9,
- Fig. 11: eine schematische, perspektivische Ansicht der Klaue der Fig. 9, etwa gemäß Ansichtspfeil XI in Fig. 9,
- Fig. 12: eine Rückansicht der Klaue der Fig. 11, etwa entlang Ansichtspfeil XII in Fig. 11,
- Fig. 13: in Einzeldarstellung In perspektivischer Ansicht ein zweites Kupplungsteil mit radialen Schraubaufnahmen,
- Fig. 14: ein Ausführungsbeispiel eines ersten Kupplungsteils in einer Darstellung gemäß Fig. 13 mit zusätzlich zu den radialen Schraubaufnahmen vorgesehenen, axialen Schraubaufnahmen.
- Fig. 15: in einer Einzeldarstellung in perspektivischer Ansicht ein Befestigungsflansch zur Befestigung an dem Antrieb, z. B. an dem Schwungrad eines Motors, sowie zur axialen Befestigung an den in Fig. 14 dargestellten axialen Schraubaufnahmen des ersten Kupplungsteils,
- Fig.16: in einer perspektivischen Ansicht einen elastischen Körper zweiter Art, und
- Fig. 17: eine Stirnansicht des elastischen Körpers zweiter Art der Fig. 16, etwa entlang Ansichtspfeil XVII in Fig. 16.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können Im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunteriagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

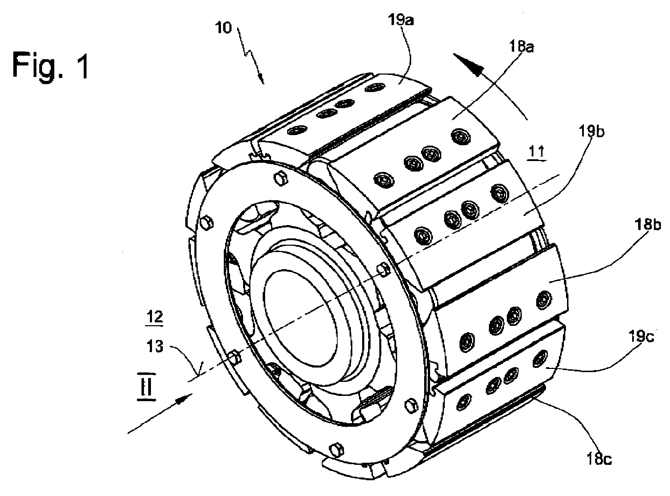

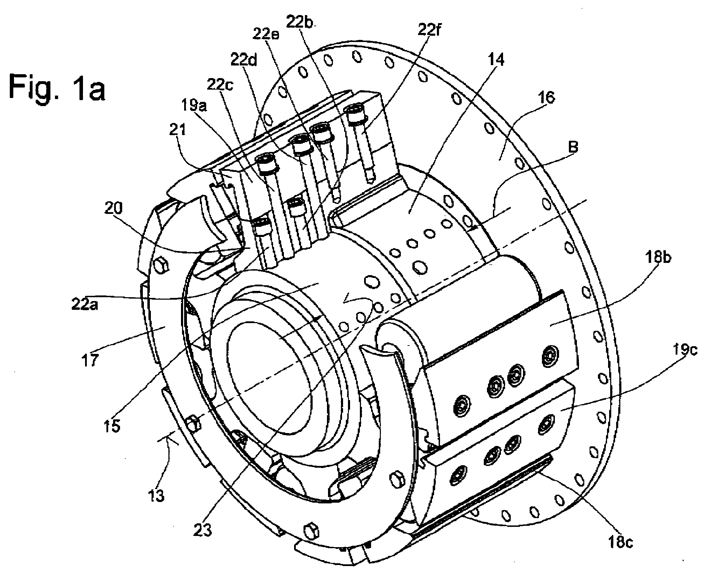

Die in ihrer Gesamtheit in den Figuren mit 10 bezeichnete Klauenkupplung soll zunächst anhand der Ausführungsbeispiele der Figuren 1 und 1a erläutert werden.

Ausweislich Fig. 1 dient die elastische Klauenkupplung 10 der Übertragung von Drehmomenten um eine mit 13 bezeichnete geometrische Achse von einem etwa bei 11 befindlichen, nicht dargestellten Antrieb zu einem etwa bei 12 befindlichen, nicht dargestellten Abtrieb.

Der Antrieb 11 kann beispielsweise ein Verbrennungsmotor oder ein Elektromotor sein.

Der Abtrieb 12 kann beispielsweise von einem Getriebe gebildet sein, das mit der Kupplung 10 über eine nicht dargestellte Abtriebswelle verbunden ist.

Die Kupplung 10 kann nach Art einer Welle-Welle- oder nach Art einer Welle-Flansch- oder auch nach Art einer Flansch-Flansch-Verbindung ausgebildet sein, worauf später noch eingegangen wird.

Wie sich vielleicht am besten aus der abgebrochenen, perspektivischen Darstellung der Fig. 1 a ergibt, umfasst die Kupplung 10 ein erstes Kupplungsteil 14 und ein zweites Kupplungsteil 15. Beide Kupplungsteile 14, 15 sind nach Art von kreiszylindrischen Ringkörpern ausgebildet. Sie weisen vorzugsweise den gleichen Innendurchmesser und den gleichen Außendurchmesser und eine gleiche axiale Erstreckung auf.

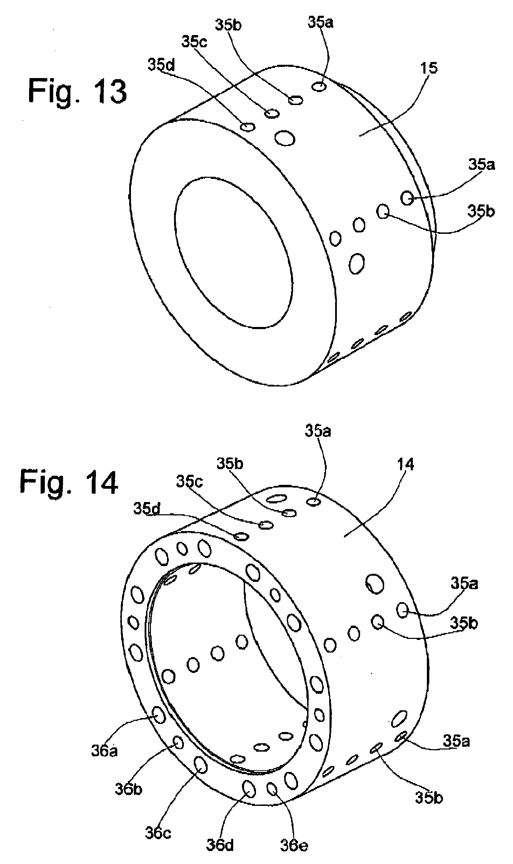

Wie insbesondere aus den Figuren 13 und 14 ersichtlich, sind auf der Außenmantelfläche der beiden Kupplungsteile 14, 15 eine Vielzahl von radialen Schraubenaufnahmen 35a, 35b, 35c, 35d, 35e vorgesehen, die lediglich beispielhaft und teilweise bezeichnet sind.

Diese Schraubenaufnahmen ermöglichen ein radiales Befestigen von Klauen 18, 19.

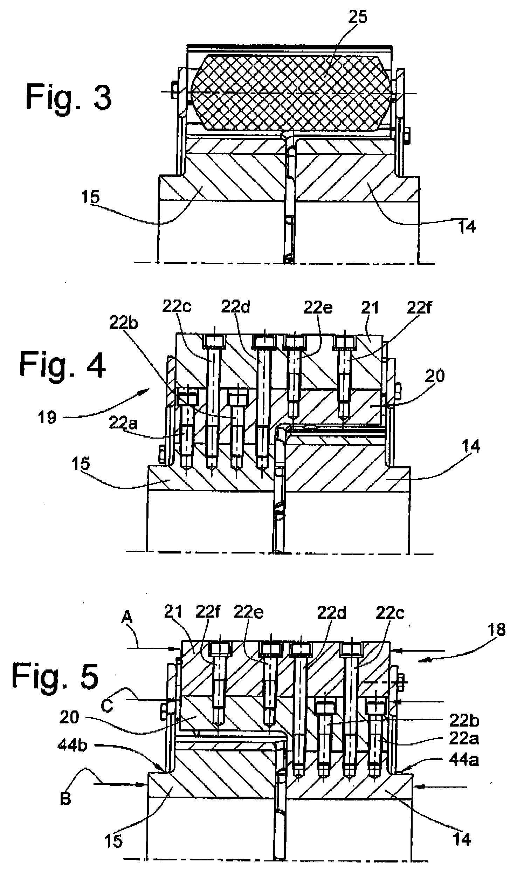

Während das Ausführungsbeispiel der Fig. 1 als Beispiel für eine Kupplung 10 der Art einer Welle-Welle-Verbindung steht, wird dem Betrachter der Fig. 1a deutlich, dass die Kupplung 10 auch als Welle-Flansch-Verbindung ausgestaltet sein kann. Der Flansch ist in Fig. 1a mit 16 bezeichnet, und in Fig. 5 in Einzeldarstellung illustriert.

Das erste Kupplungsteil 14 gemäß Fig. 14 verfügt zusätzlich zu den radialen Schraubaufnahmen 35a, 35b, 35c, 35d, 35e auch noch über axiale Schraubaufnahmen 36a, 36b, 36c, 36d, 36e, die ebenfalls nur teilweise bezeichnet sind.

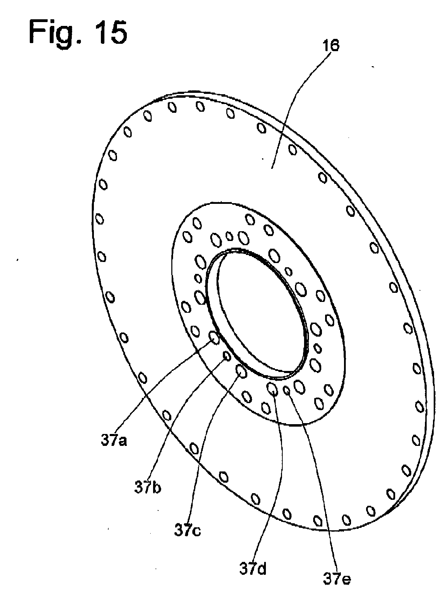

Diese korrespondieren mit Axialbohrungen 37a, 37b, 37c, 37d, 37e des Befestigungsflansches 16 gemäß Fig. 15.

Unabhängig davon, ob die Kupplung 10 insoweit als Welle-Welle-Verbindung oder als Welle-Flansch-Verbindung ausgestaltet werden soll, können die Klauen 18, 19 immer radial an den Kupplungsteilen 14, 15 festgelegt werden.

Lediglich der Vollständigkeit halber sei angemerkt, dass die Kupplungsteile 14, 15 - was nicht dargestellt ist - entweder einstückig in eine Welle übergehen können, oder innenseitig, beispielsweise durch eine Schraubbefestigung oder eine Passung, also eine Passbefestigung, drehfest mit einer Welle verbunden sein können.

Gemäß Fig. 1 a wird deutlich, dass die dort mit 19a bezeichnete Klaue - eine Klaue zweiter Art - über vier Schrauben 22a, 22b, 22c, 22d fest mit dem zweiten Kupplungsteil 15 verschraubt ist. Die Klaue 19a ist also drehfest mit dem zweiten Kupplungsteil 15 verbunden.

Die in Umfangsrichtung benachbarte, bezogen auf Fig. 1 rechts der Klaue 19a angeordnete Klaue 18a ist - was Fig. 1 nicht deutlich macht - auf analoge Weise fest mit dem ersten Kupplungsteil 14 verschraubt, und wird daher auch als Klaue erster Art bezeichnet.

Bezogen auf die Umfangsrichtung Ist in alternierender Reihenfolge jeweils eine Klaue 19 mit dem zweiten Kupplungsteil 15 verschraubt, und eine benachbart angeordnete Klaue 18 mit dem ersten Kupplungsteil 14 verschraubt.

Die mit dem ersten Kupplungsteil 14 drehfest verbundene Klauen werden als Klauen erster Art 18, und die mit dem zweiten Kupplungsteil 15 drehfest verbundenen Klauen werden als Klauen zweiter Art 19 bezeichnet.

Bereits die teilgeschnittene Darstellung in Fig. 1a lässt erkennen, dass die dort mit 19a bezeichnete Klaue aus zwei Teilen, nämlich einem Fußsegment 20 und einem Kopfsegment 21 besteht.

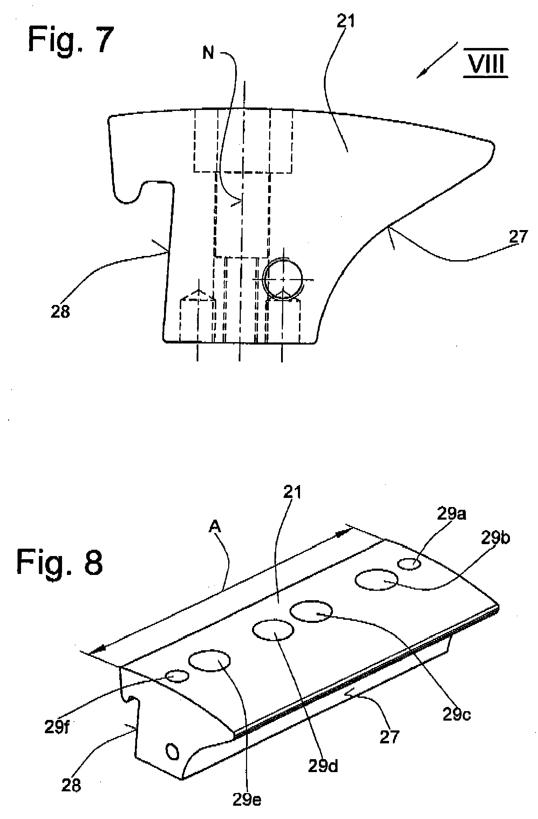

Das Kopfsegment 21 ist in den Figuren 7 und 8 in Einzeldarstellung gezeigt. Bei Betrachtung der Stirnansicht gemäß Fig. 7 wird dem Betrachter deutlich, dass das Kopfsegment 21 zwei gänzlich unterschiedlich ausgebildete Flanken 27 und 28 aufweist. Die axiale Länge A (Fig. 8) des Kopfsegmentes 21 entspricht im Wesentlichen der Summe B (Fig. 5) der axialen Längen der beiden Kupplungsteile 14 und 15 gemäß Fig. 1a, bzw. ist geringfügig kürzer.

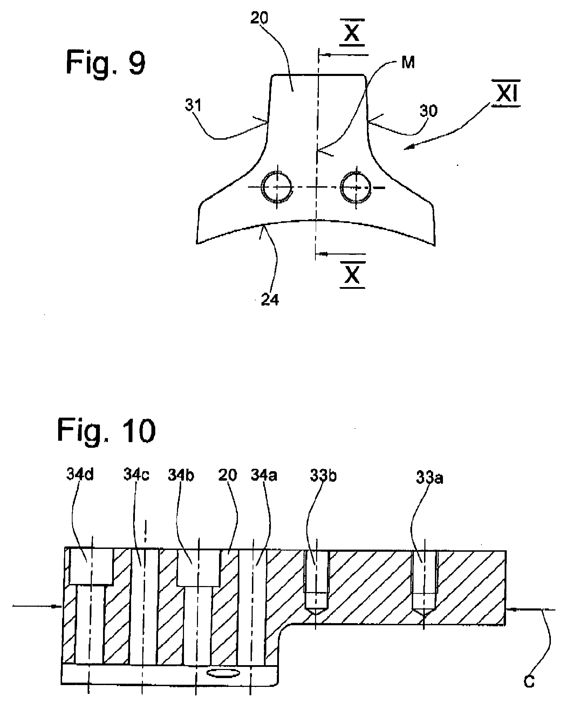

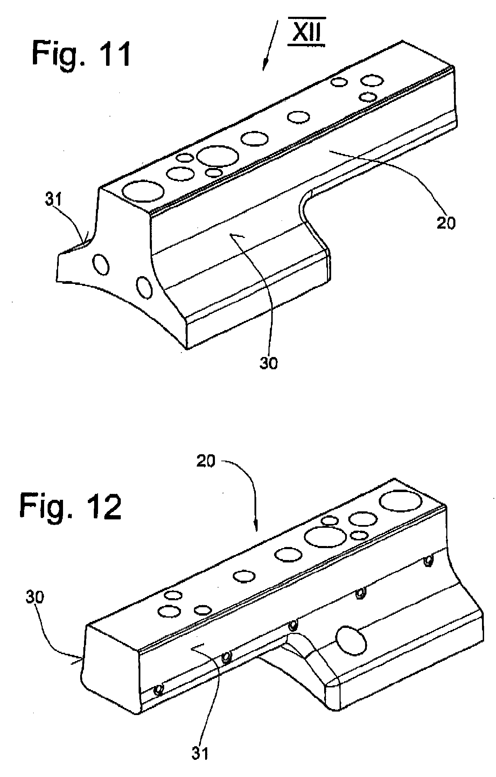

Das Fußsegment einer Klaue 18, 19 ist In den Figuren 9 bis 12 in Einzeldarstellung dargestellt. Hier erkennt man, dass die axiale Länge C der axialen Länge A des Kopfabschnittes 20 entspricht.

Insbesondere bei Betrachtung der Figuren 4 und 5 erkennt man, dass die axiale Länge A des Kopfsegmentes 21, bzw. die axiale Länge C des Fußsegmentes 20, geringfügig kürzer sind, als die Summe B der axialen Längen des ersten Kupplungsteils 14 und des zweiten Kupplungsteils 15.

Bei Betrachtung der Figuren 4 und 5 wird diesbezüglich deutlich, dass an dem ersten Kupplungsteil 14 eine erste Schulter 44a und an dem zweiten Kupplungsteil 15 eine zweite Schulter 44b angeordnet Ist, wobei die Kopfsegmente 21 und die Fußsegmente 20 etwa bündig mit dem Ansatz der Schultern 44a, 44b abschließen.

Bei anderen Ausführungsbeispielen der Erfindung ist allerdings nicht erforderlich, dass an dem ersten und an dem zweiten Kupplungsteil 14, 15 entsprechende Schultern 44a, 44b angeordnet sind.

Der Fußabschnitt 20 ist gemäß einer Mittellängsebene M Im Wesentlichen symmetrisch ausgebildet, so dass die beiden Seitenflanken 30, 31 identisch ausgebildet sind. Bei anderen Ausführungsbeispielen der Erfindung sind die beiden Flanken 30, 31 unterschiedlich ausgebildet.

Bezüglich der Mittellängsebene N des Kopfsegmentes 21 ist ausweislich Fig. 7 deutlich, dass hier eine asymmetrische Ausbildung getroffen ist.

Ausweislich der Fig. 8 weist das Kopfsegment 21 eine Vielzahl von Schraubenaufnahmen 29a, 29b, 29c, 29d, 29e, 29f auf.

Demgegenüber weist ausweislich Fig. 10 das Fußsegment 20 zwei Schraubgewindeaufnahmen 33a, 33b und jeweils vier Schraubendurchstecköffnungen, bzw. Schraubenaufnahmen 34a, 34b, 34c, 34d auf.

Ausweislich der Fig. 1a, sowie der Figuren 4 und 5 erfolgt bei diesem Ausführungsbeispiel jeweils zunächst eine Befestigung des Fußsegmentes 20 an dem entsprechenden ersten oder zweiten Kupplungsteil 14, 15 unter Zuhilfenahme der Schrauben 22a, 22b.

Sodann wird das jeweilige Kopfsegment 21 unter Zuhilfenahme der Schrauben 22c, 22d unmittelbar an dem jeweiligen Kupplungsteil 14, 15 befestigt, und zugleich unter Zuhilfenahme der Schrauben 22e, 22f direkt an dem zugehörigen Fußsegment 20 festgelegt.

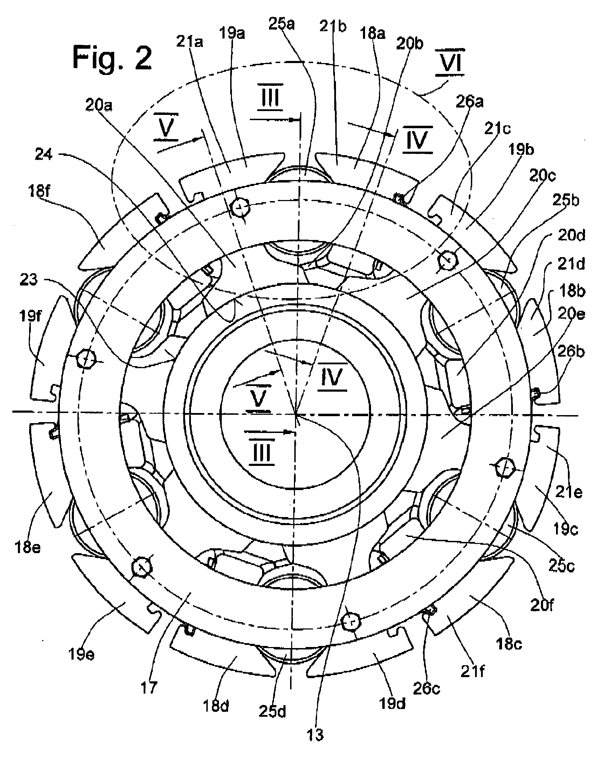

Bei Betrachtung der Darstellung der Fig. 2 ergibt sich insoweit in Umfangsrichtung eine äquidistante Anordnung von Klauen 18a, 18b, 18c usw. erster Art, und von Klauen 19a, 19b, 19c, usw. zweiter Art.

Sämtliche Klauen 19a, 19b, 19c sind jeweils identisch ausgebildet, und In gleicher Orientierung oder Ausrichtung angeordnet.

Zwischen jeweils zwei Klauen, z. B. zwischen den Klauen 19a und 18a, befindet sich ein Unterbringungsraum 32a, 32b, 32c zur Aufnahme und Unterbringung von elastischen Körpern, insbesondere von Rollenkörpern.

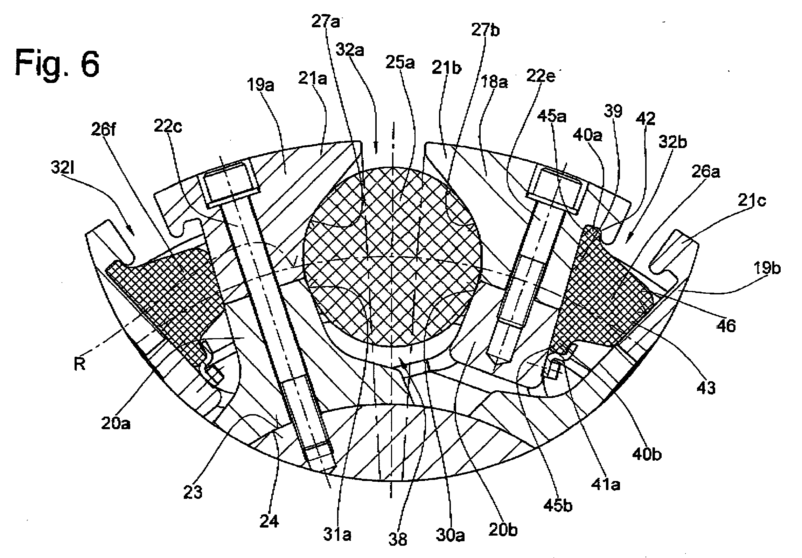

Fig. 2, besser aber noch Fig. 6, macht deutlich, dass elastische, im Wesentlichen kreiszylindrische Rollenkörper 25 erster Art und demgegenüber unterschiedlich ausgebildete elastische Körper 26 zweiter Art vorgesehen sind.

Wie sich beispielsweise aus der Fig. 3 und Fig. 6 ergibt, ist im unbelasteten Zustand der elastische Körper 25 erster Art mit einem im Wesentlichen kreiszylindrischen Querschnitt ausgestattet. Auch die zugehörige Unterbringungsraum 32a, der begrenzt ist von den entsprechenden Flankenabschnitten, die in Fig. 6 mit 27a, 27b, 30a, 31 a bezeichnet sind, im Wesentlichen kreiszylindrisch ausgebildet.

Man erkennt allerdings bei dem Ausführungsbeispiel der Fig. 6 als Bestandteil des Unterbringungsraumes 32a einen gewissen Ausweichraum 38, der bei radialer Verformung des elastischen Körpers 25a unter Last eine Verformung und ein Ausweichen von Material in den Ausweichraum 38 hinein, zulässt.

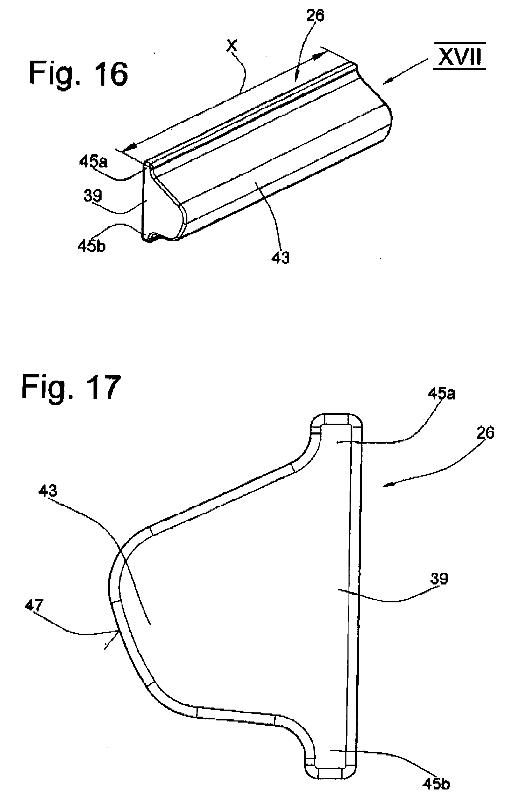

Der elastische Körper 26 zweiter Art hat demgegenüber einen anderen Querschnitt. Er weist einen Halteabschnitt 39 (Fig. 17) auf, der mit zwei Vorsprüngen 40a, 40b (Fig. 6) in Befestigungstaschen an der Klaue ruht. Die Befestigungstasche 41a (Fig. 6) wird von einem gesonderten Element bereitgestellt, welches an dem Fußsegment 20b festgelegt sein kann.

Die Befestigungstasche 40a wird durch eine unmittelbar entsprechende Einbuchtung 42 an dem Kopfsegment 21b bereitgestellt.

Das elastische Element 26 zweiter Art weist neben dem Halteabschnitt 39 einen Anlehnungsabschnitt oder Spannabschnitt 43 (Fig. 17) auf, mit dem es sich an der jeweils benachbarten Klaue, also z. B. bezogen auf die Fig. 6 an der Klaue 19b und deren zugehöriger Flanke 46 anlehnt.

Bei radialer Befestigung des Kopfsegmentes der Klaue 19b wird das elastische Element 26a zweiter Art unter Vorspannung gesetzt. Dies führt zu der Erzeugung einer Vorspannung der beiden Kupplungsteile 14, 15 in Umfangsrichtung.

Gemäß der vorliegenden Erfindung können die Klauen erster Art 18 und die Klauen zweiter Art 19 zur Befestigung an den unterschiedlichen Kupplungsteilen 14, 15 vorgesehen, identisch ausgebildet werden. Sie werden also von gleichen Teilen bereitgestellt, so dass die Lagerhaltung und auch der Herstellungsaufwand vereinfacht wird.

Darüber hinaus ist gemäß der Erfindung vorgesehen, dass die beiden Segmente 20, 21, aus denen eine Klaue 18, 19 besteht, nämlich das Fußsegment 20 und das Kopfsegment 21, jeweils aus unterschiedlichen Materialen gebildet sein können. Beispielsweise kann das Kopfsegment 21 aus Aluminium oder Stahl bestehen, und das Fußsegment 20 aus Stahl bestehen. Es können dabei aber auch völlig unterschiedliche Herstellungsarten gewählt werden. So kann beispielsweise das Fußsegment ein Schmiedeteil, und das Kopfsegment 21 ein z. B. abgelängtes Stranggussprofil sein.

Auch eine einfache Nachbearbeitung zur Erzielung möglichst optimal angepasster Flankenflächen 30, 31 wird erfindungsgemäß möglich.

Die Erfindung ermöglicht darüber hinaus die Bereitstellung von Gleichteilen bei Kupplungen mit unterschiedlichen Nabendurchmessern. So muss gemäß einem Aspekt der Erfindung die Montagefläche 24 des Fußteils 20 (Fig. 9) lediglich an die Außenmantelfläche 23 des ersten oder zweiten Kupplungsteils 14, 16 angepasst werden. Bei unterschiedlich großen Außendurchmessern des ersten Kupplungsteils 14 oder des zweiten Kupplungsteils 15, was die unterschiedlichen Außenmantelflächenwölbungen führt, kann insoweit durch eine bloße Anpassung der Montagefläche 24, ein ansonsten identisches Fußsegment 20 verwendet werden. Da eine Anpassung der Montagefläche 24 zur Änderung der Konkavität, also der Wölbungsart oder Wölbungsgröße, durch eine einfache Nachbearbeitung eines schon vorhandenen Fußsegmentes 20 möglich wird, kann gegenüber dem Stand der Technik ein erheblicher Bearbeitungsaufwand eingespart werden.

Anhand der Figuren 16 und 17 soll nun noch der elastische Körper zweiter Art erläutert werden, der insgesamt mit 26 in den Figuren 16 und 17 bezeichnet ist.

Der elastische Körper 26 zweiter Art weist eine axiale Länge X (Fig. 16) auf, die der axialen Länge A des Kopfsegmentes 21 im Wesentlichen entspricht. Der Vollständigkeit halber sei angemerkt, dass auch die axiale Länge der kreiszylindrisch ausgebildeten Rollenkörper, den elastischen Körpern 25 erster Art, ebenfalls der Länge X der elastischen Körper 26 zweiter Art entspricht.

Ausweislich der Fig. 17 weist der elastische Körper 26 zweiter Art einen im Wesentlichen abgestumpft dreieckförmigen Querschnitt auf. Von einer Art Basis, die als Halteabschnitt 39 bezeichnet wird, erstreckt sich ein Spannabschnitt 43, sich in seiner Breite verjüngt, weg. An dem Halteabschnitt 39 sind zwei Befestigungsabschnitte 45a, 45b angeordnet, die auch als Vorsprünge 40 bezeichnet werden. Diese Vorsprünge sind in den entsprechenden Befestigungstaschen 41a, 41b an dem Kopfsegment 21 der entsprechenden Klaue, bzw. an einer entsprechenden Halterung am Fußsegment 20 eingesetzt.

In montiertem Zustand, wie beispielsweise in Fig. 6 dargestellt ist, wird die entsprechende Flanke 28 (Fig. 7) des Kopfsegmentes 21c der Fig. 6 zu einer Vorspannfläche 46. Mit zunehmender radialen Annäherung des Kopfsegmentes 21 an die Drehachse 13, d. h. während der Montage des Kopfsegmentes 21 an der Kupplung 10, kommt die Vorspannfläche 46 mit der Stirnfläche 47 (Fig. 17) des elastischen Körpers 26 zweiter Art In Kontakt, und komprimiert den elastischen Körper 26 zweiter Art in Umfangsrichtung.

Lediglich der Vollständigkeit halber sei angemerkt, dass die in Fig. 6 mit 18a bezeichnete Klaue, insbesondere deren Kopfsegment 21 b, zunächst montiert werden kann, ggf. mit bereits darin eingesetztem elastischen Körper 26a zweiter Art.

Erst nach erfolgter Befestigung kann das Kopfsegment der benachbarten Klaue 19b, das in Fig. 6 mit 21c bezeichnet ist, radial montiert werden, und im Zuge der fortwährenden radialen Annäherung an die Drehachse 13 für eine Komprimierung des elastischen Körpers 26a in Umfangsrichtung sorgen.

In Folge der Komprimierung sämtlicher elastischer Körper 26a, 26b, 26c, 26d, 26e zweiter Art werden das erste Kupplungsteil 14 und das zweite Kupplungsteil 15 - im lastfreien Zustand - gegeneinander vorgespannt. Dies sorgt auch dafür, dass die elastischen Körper 25a. 25b, 25c, 25d, 25e, usw. erster Art, zumindest geringfügig, unter Vorspannung gesetzt werden.

Bei plötzlichen Lastwechseln, wie sie im Betrieb auftreten können, insbesondere bei Anwendung der Kupplung 10 im Bereich von Erzmühlen, Stelnmühlen, Stahlmühlen oder dergleichen, also bei Anwendungen, bei denen häufig abrupte Rückstöße auftreten, kann eine Lösung der Flächen der Klauen, z. B. der Flanken 27a, 27b gemäß Fig. 6, von dem in Fig. 6 mit 25a bezeichneten elastischen Körper 25a erster Art vermieden werden.

Jeweils zwei, einander in Umfangsrichtung benachbarte Unterbringungsräume 32a, 32b der Kupplung 10, sind unterschiedlich ausgebildet. Wie sich insbesondere aus Fig. 6 ergibt, sind Unterbringungsräume 32a, 32c, 32e, etc. erster Art vorgesehen, die einen im Wesentlichen kreisförmigen Querschnitt aufweisen, und sich insoweit an den kreiszylindrischen Querschnitt der elastischen Körper 25 erster Art anpassen.

Die Unterbringungsräume zweiter Art 32b, 32d, 32f sind im Wesentlichen dreieckförmig ausgebildet, und insoweit an die Querschnittskontur der elastischen Körper 26 zweiter Art angenähert.

Wie sich insbesondere aus Fig. 6 ergibt, liegen die Mittelpunkte der elastischen Körper 25 erster Art und der elastischen Körper 26 zweiter Art im Wesentlichen auf einem gleichen Radius R um die Drehachse 13.

Gemäß einer vorteilhaften Ausgestaltung der Erfindung ist das Fußsegment 20 als Schmiedeteil ausgebildet, wobei die Montagefläche 24, und ggf. auch eine oder mehrere Flanken 30, 31, durch ein besonderes Schmiedeverfahren generiert werden können. Hierdurch kann ein Fußsegment 20 der Klaue 18, 19 bereitgestellt werden, ohne dass eine Nachbearbeitung erforderlich ist.

Das Kopfsegment 21 ist aus einem anderen Material, vorzugsweise aus Aluminium, und kann z. B. von einem Stranggussprofil bereitgestellt sein.

## Patentansprüche

1. Elastische Klauenkupplung (10) zur Übertragung von Drehmomenten von einem Antrieb (11) zu einem Abtrieb (12), mit einem ersten, dem Antrieb zugeordneten Kupplungsteil (14), und einem zweiten, dem Abtrieb zugeordneten Kupplungsteil (15), die beide um eine gemeinsame Drehachse (13) rotieren, wobei an beiden Kupplungsteilen Klauen (18, 19) angeordnet sind, die sich von dem jeweiligen Kupplungstell radial nach außen und in Axialrichtung im Sinne einer Erzielung einer axialen Überdeckung mit dem jeweils anderen Kupplungsteil erstrecken, wobei jeweils zwei in Umfangsrichtung um die Drehachse benachbart angeordnete Klauen zwischen sich einen Unterbringungsraum (32a, 32b, 32c, 32d, 32e) für einen elastischen Körper ausbilden, **dadurch gekennzeichnet, dass** in Umfangsrichtung eine Mehrzahl von elastischen Körpern (25a, 25b, 25c) erster Art und eine Mehrzahl von elastischen Körpern (26a, 26b, 26c) zweiter Art vorgesehen sind, wobei sich die elastischen Körper zweiter Art von den elastischen Körpern erster Art hinsichtlich ihrer Geometrie und/oder hinsichtlich Ihrer Materialbeschaffenheit unterscheiden.

2. Elastische Klauenkupplung nach Anspruch 1, **dadurch gekennzeichnet, dass** zumindest eine Klaue (18, 19) oder zumindest ein Segment (20, 21) einer Klaue radial montierbar ausgebildet ist, wobei an der Klaue oder an dem Segment der Klaue eine Vorspannfläche (46) angeordnet ist, die Im montierten Zustand eine Kraft in Umfangsrichtung auf den an der Vorspannfläche anliegenden elastischen Körper (26a) ausübt.

3. Elastische Klauenkupplung (10) zur Übertragung von Drehmomenten von einem Antrieb (11) zu einem Abtrieb (12), mit einem ersten, dem Antrieb zugeordneten Kupplungsteil (14), und einem zweiten, dem Abtrieb zugeordneten Kupplungsteil (15), die beide um eine gemeinsame Drehachse (13) rotieren, wobei an beiden Kupplungsteilen Klauen (18, 19) angeordnet sind, die sich von dem jeweiligen Kupplungsteil radial nach außen und in Axialrichtung im Sinne einer Erzielung einer axialen Überdeckung mit dem jeweils anderen Kupplungsteil erstrecken, wobei jeweils zwei in Umfangsrichtung um die Drehachse benachbart angeordnete Klauen zwischen sich einen Unterbringungsraum (32) für einen elastischen Körper ausbilden, **dadurch gekennzeichnet, dass** zumindest eine Klaue (20) oder zumindest ein Segment (21) einer Klaue radial montierbar ausgebildet Ist, wobei an der Klaue oder an dem Segment der Klaue eine Vorspannfläche (46) angeordnet ist, die im montierten Zustand eine Kraft in Umfangsrichtung auf den an der Vorspannfläche anliegenden elastischen Körper (26a) ausübt.

4. Elastische Klauenkupplung nach Anspruch 3, **dadurch gekennzeichnet, dass** in Umfangsrichtung eine Mehrzahl von elastischen Körpern (25a, 25b, 25c) erster Art und eine Mehrzahl von von elastischen Körpern (26a, 26b, 26c) zweiter Art vorgesehen sind, wobei sich die elastischen Körper zweiter Art von den elastischen Körpern erster Art hinsichtlich ihrer Geometrie und/oder hinsichtlich Ihrer Materialbeschaffenheit unterscheiden.

5. Elastische Klauenkupplung nach einem der vorangegangenen Ansprüche, **dadurch gekennzeichnet, dass** Unterbringungsräume (32a, 32c, 32e) erster Art und Unterbringungsräume (32b, 32d, 32f) zweiter Art vorgesehen sind, die unterschiedlich ausgebildet sind, wobei insbesondere die Geometrie des Unterbringungsraum erster Art an die Geometrie des elastischen Körpers erster Art und die Geometrie des Unterbringungsraum zweiter Art an die Geometrie des elastischen Körpers zweiter Art angepasst ist.

6. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** in Umfangsrichtung eine alternierende Anordnung von elastischen Körpern erster Art und elastischen Körpern zweiter Art getroffen ist.

7. Elastische Klauenkupplung nach Anspruch 1. oder nach einem der vorangegangenen Ansprüche, soweit dieser auf Anspruch 1 oder auf Anspruch 4 zurückbezogen ist, **dadurch gekennzeichnet, dass** zumindest eine Mehrzahl der Klauen wenigstens zwei Segmente, insbesondere in Radialrichtung montierbare Segmente (21, 21a, 21b, 21c), umfasst, weiter insbesondere wenigstens ein Fußsegment und ein Kopfsegment, wobei die Vorspannfläche (46) an einem Segment, insbesondere an dem Kopfsegment (21) angeordnet ist.

8. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** sich die elastischen Körper zweiter Art von den elastischen Körpern erster Art hinsichtlich ihres Querschnittes unterscheiden.

9. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** die elastischen Körper zweiter Art einen Spannabschnitt (43) aufweisen, der mit der Vorspannfläche (46) kooperiert.

10. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** die elastischen Körper zweiter Art einen Halteabschnitt (39) aufweisen.

11. Elastische Klauenkupplung nach Anspruch 9 und 10, **dadurch gekennzeichnet, dass** sich der Spannabschnitt (43) von dem Halteabschnitt (39) weg erstreckt und verjüngt.

12. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** die elastischen Körper (25a, 25b) erster Art nach Art von Rollenkörpern, insbesondere im Wesentlichen kreiszylindrisch, ausgebildet sind.

13. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** die elastischen Körper (26a, 26b) zweiter Art eine andere Shore-Härte aufweisen, als die elastischen Körpern (25a, 25b) erster Art.

14. Elastische Klauenkupplung nach einem der vorangegangenen Ansprüche, **dadurch gekennzeichnet, dass** die Klauen (18, 19) beider Kupplungsteile identisch ausgebildet sind.

15. Elastische Klauenkupplung nach Anspruch 1, oder nach einem der vorangegangenen Ansprüche, soweit dieser auf Anspruch 1 oder auf Anspruch 4 zurückbezogen ist, **dadurch gekennzeichnet, dass** die elastischen Körper (25a, 25b) erster Art und die elastischen Körper (26a, 26b) zweiter Art auf gleichem Radius (R) um die Drehachse (13) herum angeordnet sind.
